# EUROPÄISCHE PATENTSCHRIFT

(11) **EP 2 973 946 B1**
(45) Veröffentlichungstag und Bekanntmachung des Hinweises auf die Patenterteilung: **22.02.2017**
(21) Anmeldenummer: 13758779.6
(22) Anmeldetag: 27.08.2013
(51) Int. Cl.: H02K 1/27, H02K 15/03

(54) **VERFAHREN ZUM HERSTELLEN EINES EINZELSEGMENTLÄUFERS UND ENTSPRECHENDER LÄUFER**
METHOD FOR PRODUCING A SINGLE SEGMENT ROTOR AND CORRESPONDING ROTOR
PROCÉDÉ DE FABRICATION D'UN ROTOR À SEGMENTS INDIVIDUELS ET ROTOR CORRESPONDANT

(30) Priorität: 16.04.2013 EP 13163945
(43) Veröffentlichungstag der Anmeldung: 20.01.2016
(73) Patentinhaber: Siemens Aktiengesellschaft, 80333 München (DE)
(72) Erfinder: VOLKMUTH, Benjamin, 97717 Sulzthal (DE); SCHNEIDER, Helmut, 97688 Bad Kissingen (DE); STÄBLEIN, Armin, 97650 Fladungen (DE)
(86) Internationale Anmeldenummer: PCT/EP2013/067658
(87) Internationale Veröffentlichungsnummer: WO 2014/169973

(56) Entgegenhaltungen:
- EP-A2- 1 100 175
- DE-A1- 10 219 190
- DE-A1- 19 846 924
- US-A1- 2006 061 227

## Beschreibung

Die vorliegende Erfindung betrifft ein Verfahren zum Herstellen eines Einzelsegmentläufers für eine elektrische Maschine. Darüber hinaus betrifft die vorliegende Erfindung einen entsprechenden Einzelsegmentläufer.

Einzelsegmentläufer für Elektromotoren mit Flusskonzentration zeichnen sich dadurch aus, dass der Läufer sternförmig mit Permanentmagneten bestückt ist und der Zwischenraum zwischen den einzelnen Permanentmagneten jeweils durch ein ferromagnetisches Einzelsegment gefüllt ist. Ein solches Einzelsegment wird üblicherweise als Blechpaket gefertigt und kann daher als Blechpaketsegment bezeichnet werden. Die einzelnen Blechpaketsegmente sind, wenn möglich, nicht miteinander verbunden.

Der Aufbau und die Fertigung eines Elektromotors mit Magneten in Flusskonzentration bedarf spezieller Techniken. Insbesondere sollte der Aufbau streuungsarm sein und für eine Serienproduktion geeignet sein. Da ein streuungsarmer Aufbau in der Regel die Verwendung von Blecheinzelsegmenten, d.h. Blechpaketsegmenten erfordert und so einen erhöhten Fertigungsaufwand mit sich führt, konkurriert ein solcher Aufbau mit einem Serienfertigungsprozess.

Bisherige Ausführungen entsprechender Rotoren sind ein Kompromiss zwischen Einzelsegmenten einerseits und Rotorblechen andererseits, die untereinander verbunden sind. Mit kompletten Rotorblechen wird erreicht, dass das Rotorblechpaket mechanisch stabiler und einfacher herstellbar wird, aber ein Teil des Flusses der Magnete kurzgeschlossen wird. Möglich wird dies, z.B. durch stanzpaketierte Läuferpakete, bei denen in definierten Abständen die inneren Unterbrechungsstege erhalten bleiben. Einzelsegmente, wie sie beispielsweise in der nachveröffentlichten europäischen Patentanmeldung EP 12 159 917.9 beschrieben sind, bieten den Vorteil, dass es zu keinem Kurzschluss kommt. Allerdings steigt die Bauteilanzahl und somit der Montage- und Fertigungsaufwand.

Darüber hinaus muss bei einem Einzelsegmentläufer mit Flusskonzentration das Rotorblech durch "amagnetisches" Material (Permeabilitätszahl *µ*ᵣ kleiner 5) zwischen jedem Pol getrennt aufgebaut werden. Dies führt zu einer hohen Anzahl von Einzelsegmenten, die zusammengefügt werden müssen. Dabei entstehen Probleme wegen der komplizierten Herstellung der Einzelsegmente und des komplizierten Zusammenfügens der Einzelsegmente. Außerdem muss durch das amagnetische Material eine getrennte Flussführung realisiert werden. Weiterhin ergeben sich Probleme hinsichtlich des Positionierens und Haltens der Magnete sowie der Momentenübertragung.

Bisherige Ausführungen sind ein Kompromiss zwischen Einzelsegmenten und Rotorblechen, die untereinander verbunden sind. So wird erreicht, dass das Rotorpaket mechanisch stabiler und leichter herstellbar wird, aber ein Teil des Flusses der Magnete kurzgeschlossen wird. Möglich wird dies, z. B. durch stanzpaketierte Läuferpakete, bei denen immer wieder die inneren Unterbrechungsstege erhalten bleiben.

Die gattungsgemäße Druckschrift DE 102 19 190 A1 beschreibt einen Permanentmagnet-Rotor für eine elektrische Maschine, bei dem strahlenförmig um eine Welle angeordnete Magnete und dazwischen angeordnete Flussleitstücke mit im wesentlichen kreissegmentförmigem Querschnitt zwischen zwei mit der Welle verbundenen Deckscheiben gehalten und mittels stabförmiger Halteelemente fixiert werden, die durch Aussparungen in den Flussleitstücken geführt und mit den Deckplatten verbunden sind. Ein solcher Motor wird gegen Wirbelstromverluste geschützt, indem die stabförmigen Halteelemente und die Deckplatten als einstückig in einem Spritzgussverfahren gefertigtes Bauteil aus Kunststoff oder einem anderen nicht magnetischen und elektrisch nicht leitenden Material ausgebildet sind.

Ein weiteres Verfahren und eine permanentmagneterregte Baugruppe einer elektrischen Maschine sind aus der DE 198 46 924 A1 bekannt. Darin wird ein Verfahren zur Herstellung einer permanentmagneterregten Baugruppe insbesondere einer Synchronmaschine mit einem zylindrischen oder linearen ferromagnetischen Körper und darin angeordnete Permanentmagnete beschrieben, wobei einteilige Blechroden oder Blechstreifen spezieller Form mit Nuten und Zähnen zu einem Blechpaket geschichtet werden und ein Verfestigen der Blechroden oder Blechstreifen untereinander mittels eines nicht ferromagnetischen Materials durchgeführt wird.

In der Druckschrift US 2006/0061227 A1 ist ein Speichen-Permanentmagnetrotor beschrieben, welcher eine unmagnetische Endkappe aufweist, welche mit einer Welle und einem ferromagnetischen Polschuh verbunden ist. Eine zweite unmagnetische Endkappe ist so angeordnet, dass der Polschuh zwischen der ersten und der zweiten Endkappe angeordnet ist.

In der Druckschrift EP 1 100 175 A2 ist ein Rotor einer rotierenden Maschine beschrieben, welches ein unmagnetisches Teil aufweist, das an der Welle befestigt ist. Zudem weist der Rotor Permanentmagnete und Blechpakete auf, welche mit dem unmagnetischen Teil verbunden sind und radial und abwechselnd umlaufend miteinander angeordnet sind.

Die Aufgabe der vorliegenden Erfindung besteht darin, ein Verfahren bereitzustellen, mit dem ein Einzelsegmentläufer für eine elektrische Maschine mit weniger Aufwand hergestellt werden kann.

Erfindungsgemäß wird diese Aufgabe gelöst durch ein Verfahren nach Patentanspruch 1.

In vorteilhafter Weise werden also die Blechpaketsegmente jeweils mit mindestens einer Fixierkontur (z.B. Hinterschneidung bzgl. der auf das Blechpaketsegment wirkenden Zentrifugalkraft) versehen, und der Zwischenraum zwischen der Welle und den Blechpaketsegmenten wird mit einem aushärtbaren amagnetischen (Permeabilitätszahl *µ*ᵣ kleiner 5) Material ausgegossen. Dadurch ergibt sich zwischen dem ausgehärteten amagnetischem Material und den Fixierkonturen jeweils ein Formschluss, der das betreffende Blechpaketsegment an der Welle hält. Durch den Schritt des Ausgießens lassen sich also alle Blechpaketsegmente in einem Fertigungsschritt an der Welle fixieren.

Das Anordnen der Blechpaketsegmente beinhaltet, dass eine Vielzahl an einteiligen, ringförmigen Blechen koaxial mit der Welle angeordnet werden, wobei jedes Blech je ein Einzelblech jedes der Blechpaketsegmente aufweist. Dadurch, dass die Einzelbleche der Blechpaketsegmente zunächst einteilig miteinander verbunden sind, sind sie einfach in dem Formwerkzeug zu platzieren.

Jedes Blech ist an seinem Außenumfang vor dem Ausgießen durch erste Stege geschlossen, wobei diese ersten Stege nach dem Ausgießen beseitigt werden. Diese ersten Stege können besonders einfach entfernt werden, wenn sie am Außenumfang einer Blechscheibe liegen, welche die Einzelbleche beinhaltet.

Jedes Blech besitzt am Umfang verteilt Magnetaussparungen, durch die zwischen den Blechpaketsegmenten Magnettaschen gebildet werden, in die die Permanentmagnete eingesteckt werden. Damit sind durch die Blechpaketsegmente die Positionen der Permanentmagnete automatisch vorgegeben.

Des Weiteren ist jede Magnetaussparung an der zum Zentrum des jeweiligen ringförmigen Blechs weisenden Seite durch einen zweiten Steg geschlossen, sodass beim Ausgießen das amagnetische Material nicht in die Magnettaschen fließt, und die zweiten Stege können nach dem Ausgießen entfernt werden. Dadurch wird verhindert, dass amagnetisches Material beim Ausgießen in die Magnettaschen eindringt.

Des Weiteren kann die Fixierkontur im Fuß jedes Blechpaketsegments, der zu der Welle gerichtet ist, mit einer Hinterschneidung realisiert werden, welche einer bei Rotation des Einzelsegmentläufers auf das jeweilige Blechpaketsegment wirkenden Zentrifugalkraft entgegenwirkt. Dadurch erfolgt die Fixierung der Blechpaketsegmente wellennah im Fuß des jeweiligen Blechpaketsegments.

Ferner kann in jedem Blechpaketsegment ein Hohlraum durch korrespondierende Aussparungen in den Einzelblechen des Blechpaketsegments gebildet werden, welcher vor dem Schritt des Ausgießens an beiden Stirnseiten des Blechpaketsegments verschlossen wird, oder welcher mit dem amagnetischen Material ausgegossen wird. Durch den Hohlraum kann die Trägheit des Rotors reduziert werden. Andererseits kann der Hohlraum auch für die zusätzliche Fixierung des Rotors bzw. der Einzelbleche der Blechpaketsegmente genutzt werden.

In einer Ausgestaltung können axial hintereinander mehrere Blechpaketsegmente jeweils getrennt durch einen vorgegebenen Abstand in dem Formwerkzeug angeordnet werden, und der durch den Abstand sich ergebende Zwischenraum lässt sich dann beim Ausgießen mitfüllen. Dadurch ergibt sich in axialer Richtung ein modularer Aufbau, womit sich auch stabile Rotoren größerer axialer Länge realisieren lassen.

Zum Ausgießen kann als amagnetisches Material ein Kunststoff, insbesondere ein faserverstärkter Kunststoff oder Aluminium verwendet werden. Diese Stoffe zeichnen sich durch ihre geringe Dichte bei hoher Festigkeit aus. Dadurch kann ein stabiler Rotor mit geringem Gewicht realisiert werden.

Die vorliegende Erfindung wird nun anhand der beigefügten Zeichnungen näher erläutert, in denen zeigen:
- FIG 1: eine perspektivische Ansicht einer Welle für einen Rotor einer elektrischen Maschine;
- FIG 2: um die Welle von FIG 1 platzierte Blechpaketsegmente;
- FIG 3: ein einzelnes Blechpaketsegment mit einem Teilausschnitt;
- FIG 4: die Anordnung von FIG 2 mit eingefügten Permanentmagneten;
- FIG 5: die Anordnung von FIG 4 nach dem Ausgießen mit amagnetischem Material;
- FIG 6: einen Querschnitt durch den Rotor von FIG 5;
- FIG 7: den Rotor von FIG 5 mit einem Teilausschnitt;
- FIG 8: ein einteiliges Blech mit zusammenhängenden Einzelblechen für jedes am Umfang angeordnete Blechpaketsegment;
- FIG 9: eine Stirnseitenansicht eines mit Blechen gemäß FIG 8 gefertigten Rotors nach dem Ausgießen mit amagnetischem Material;
- FIG 10: einen vergrößerten Ausschnitt von FIG 9 mit Ausführungsvarianten;
- FIG 11: den Rotor von FIG 9 mit abgedrehten ersten Stegen;
- FIG 12: den Rotor von FIG 11 mit entfernten zweiten Stegen;
- FIG 13: den Rotor von FIG 12 im Endzustand mit eingesetzten Permanentmagneten; und
- FIG 14: den Rotor von FIG 13 in perspektivischer Ansicht.

Die nachfolgend näher geschilderten Ausführungsbeispiele stellen bevorzugte Ausführungsformen der vorliegenden Erfindung dar.

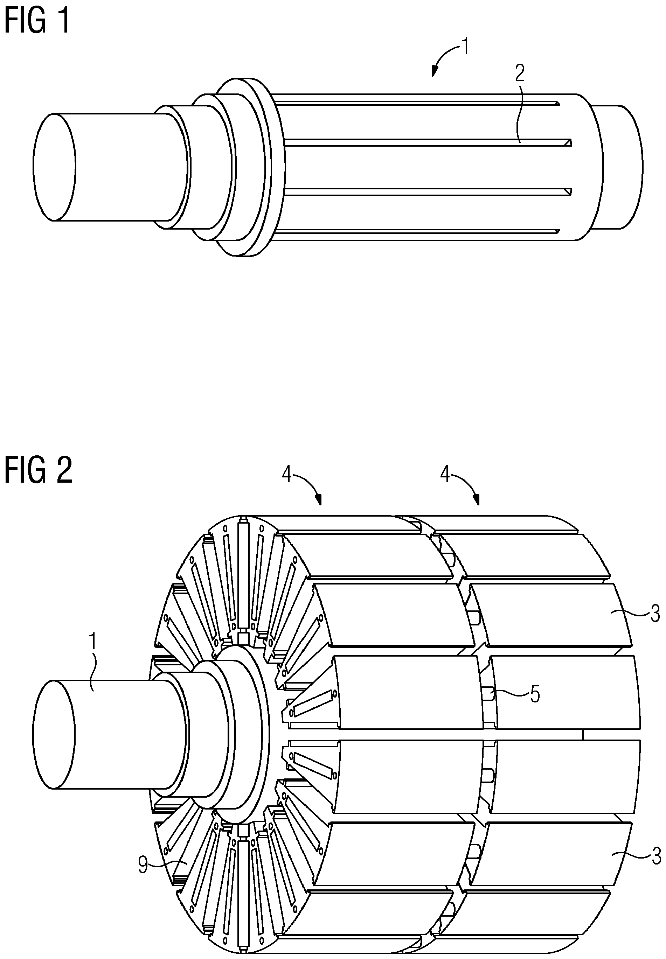

In FIG 1 ist eine Welle 1 dargestellt, die zur Herstellung eines Einzelsegmentläufers für eine elektrische Maschine geeignet ist. Die elektrische Maschine kann ein Motor oder ein Generator sein. Sie besitzt hier Nuten 2 oder andere geeignete Mittel zur Drehmomentenübertragung.

Die in FIG 1 beispielhaft dargestellte Welle wird für die Herstellung des Einzelsegmentläufers in einem Formwerkzeug platziert. Das Formwerkzeug wird für ein Spritzgussverfahren verwendet. In dem Spritzgussverfahren wird die Welle 1 teilweise mit Kunststoff, insbesondere faserverstärktem Kunststoff, Aluminium oder dergleichen umspritzt. Das Formwerkzeug mit Positionierungsvorrichtung ist in FIG 1 wie auch in den folgenden Figuren nicht dargestellt.

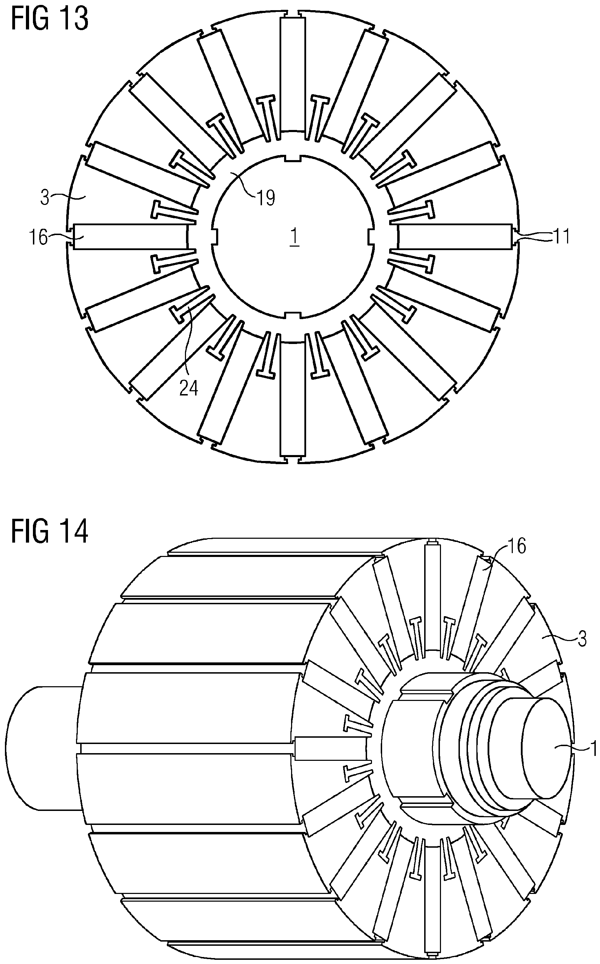

FIG 2 zeigt die Welle 1, um die zahlreiche Blechpaketsegmente 3 in dem nicht dargestellten Formwerkzeug platziert sind. Es sind hier 16 Blechpaketsegmente am Umfang gleichmäßig verteilt angeordnet. In axialer Richtung der Welle sind jeweils zwei Blechpaketsegmente 3 hintereinander angeordnet. Dadurch lassen sich größere axiale Baulängen von Einzelsegmentläufern realisieren. Auf diese Weise können auch mehr als zwei Blechpaketsegmente axial hintereinander angeordnet werden. Ein Einzelsegmentläufer mit nur einem einzigen Blechpaketsegment in axialer Richtung ist in FIG 14 schematisch wiedergegeben.

Gemäß dem Beispiel von FIG 2 ergibt sich also ein modularer Aufbau mit zwei Blechpaketsegmentringen 4, die axial hintereinander angeordnet sind. Zwischen beiden Blechpaketsegmentringen 4 soll zur Stabilisierung eine Zwischenscheibe ausgebildet werden. Den dafür notwendigen Raum im Formwerkzeug schaffen Abstandshülsen 5 oder andere Abstandshalter zwischen den beiden Blechpaketsegmentringen 4. Die Abstandshülsen 5 werden während der Positionierung der Blechpaketsegmente 3 mit in das Formwerkzeug eingebracht.

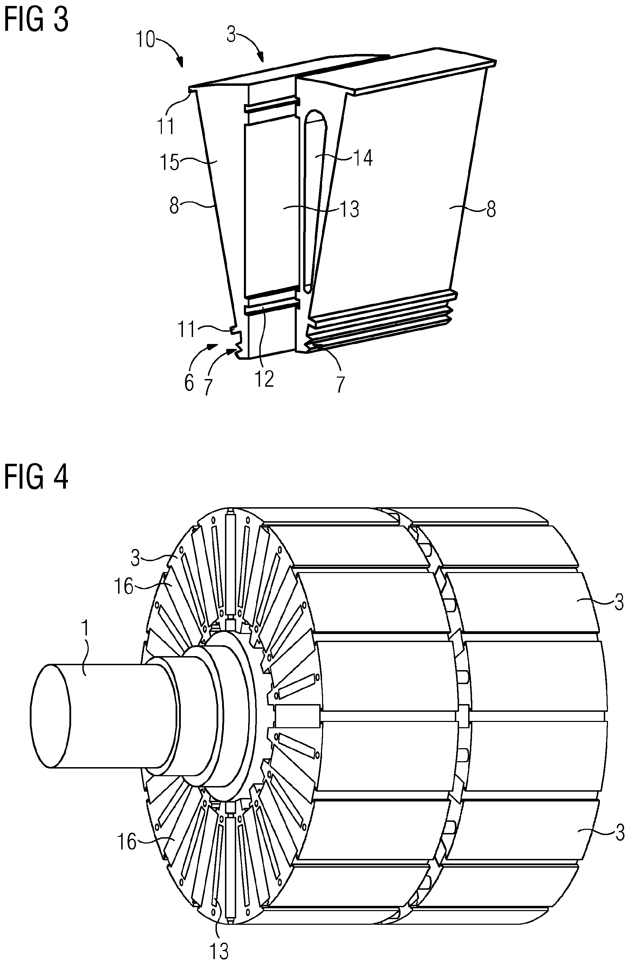

FIG 3 zeigt ein einzelnes Blechpaketsegment 3, von zur besseren Darstellung seiner Struktur ein Teilausschnitt an der vorderen Ecke abgeschnitten ist. Ein solches Blechpaketsegment 3 besitzt in etwa einen dreieckigen Querschnitt. Die Spitze davon bildet den Fuß 6, der der Welle 1 zugewandt ist. An dem Fuß 6 befinden sich beiderseits der Mitte Fixierkonturen 7. Im vorliegenden Beispiel sind es auf jeder Seite zwei Rillen, die in axialer Richtung verlaufen. Pro Rille ergibt sich damit eine Hinterschneidung, die einen Formschluss mit der einzugießenden Formmasse ermöglicht und damit verhindert, dass das Blechpaketsegment 3 in radialer Richtung von der Welle durch Zentrifugalkraft abgezogen wird.

Die Flanken 8 jedes Blechpaketsegments 3 stellen die Begrenzungsflächen von Magnettaschen 9 dar, die jeweils zwischen zwei Blechpaketsegmenten 3 gebildet sind (vgl. FIG 2). Im Bereich des Fußes 6 und im Bereich des Kopfes 10 des Blechpaketsegments 3 sind Positionierhilfen 11 für die einzufügenden Permanentmagnete angeordnet. Die Positionierhilfen 11 im Bereich des Kopfes 10 bilden mit den einzusetzenden Magneten einen Formschluss, sodass diese an einem radialen Herausrutschen gehindert sind.

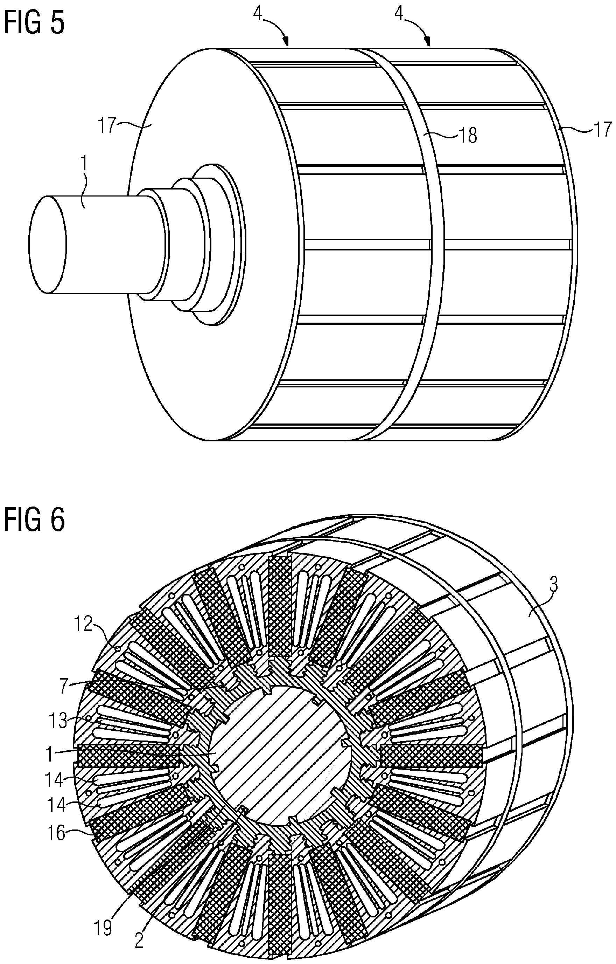

In einem Blechpaketsegment 3 können ein oder mehrere Hohlräume ausgebildet sein. In FIG 2 ist bei jedem Blechpaketsegment 3 abgesehen von Positionierlöchern 12 nur ein einziger Hohlraum 13 zu erkennen. Im Beispiel von FIG 3 ist ein zweiter Hohlraum 14 hinter einem Endblech 15 angedeutet. In dem Beispiel von FIG 6 ist zu erkennen, dass hier ein Einzelblech einen zusätzlichen dritten Hohlraum aufweist. Die einzelnen Hohlräume sind voneinander getrennt. Ein solcher Hohlraum kann dazu dienen, einen Träger einzufügen, um das Blechpaketsegment bzw. den Läufer zu stabilisieren. Beispielsweise kann ein Träger dadurch gebildet werden, dass der Hohlraum durch das amagnetische Material (Permeabilitätszahl *µ*ᵣ kleiner 5) ausgegossen wird. In diesem Fall ist es notwendig, dass der jeweilige Hohlraum nicht durch ein Endblech 15 verschlossen wird (vgl. FIG 2). Der Hohlraum kann aber auch dazu benutzt werden, um die Masse des Läufers zu reduzieren und somit seine Trägheit zu verkleinern. In diesem Fall ist er durch das Endblech 15 zu verschließen (vgl. FIG 3).

Weiterhin verfügt das Blechpaketsegment 3 hier über die bereits erwähnten Löcher 12, eines im Bereich des Fußes 6 und eines im Bereich des Kopfes 10 des Blechpaketsegments 3. Diese Löcher 12 dienen zur Positionierung der Blechpaketsegmente im Formwerkzeug und beispielsweise zum Fügen der Abstandshülsen 5.

In FIG 4 ist die Anordnung von FIG 2 dargestellt, wobei in die Magnettaschen 9 Permanentmagnete 16 eingefügt sind, die die gleiche axiale Länge wie die einzelnen Blechpaketsegmente 3 besitzen. Die Permanentmagnete 16 können über die Fügehilfen 11 zuverlässig zwischen den Blechpaketsegmenten 3 positioniert werden.

Für den folgenden Spritzgussvorgang können die an den Stirnseiten der Einzelblechpakete 3 offenen Hohlräume 13 mit der entsprechenden Formmasse gefüllt werden, die dann den entsprechenden Träger bildet. Alternativ können die Hohlräume 13 auch mit Stahl oder einer anderen Formmasse (z.B. kohlefaserverstärkter Kunststoff oder Schaum) gefüllt werden. Durch diesen Prozess kann der Läufer weiter auf seine Anforderungen hin modifiziert werden.

Nachdem alle Komponenten im Formwerkzeug positioniert sind, wird das Werkzeug verschlossen und die Formmasse (Kunststoff, Aluminium, faserverstärkter Kunststoff etc.) eingebracht. Diese füllt die Hohlräume aus und bildet so einen festen Verbund, welcher den Läufer zusammenhält.

FIG 5 zeigt nun den fertig gestellten Einzelsegmentläufer nach dem Spritzguss. Durch die Formmasse sind an den Stirnseiten des Läufers Endscheiben 17 gebildet. Der Spalt zwischen den beiden Blechpaketsegmentringen 4 ist durch eine Trennscheibe 18, die ebenfalls aus der Formmasse besteht, gefüllt.

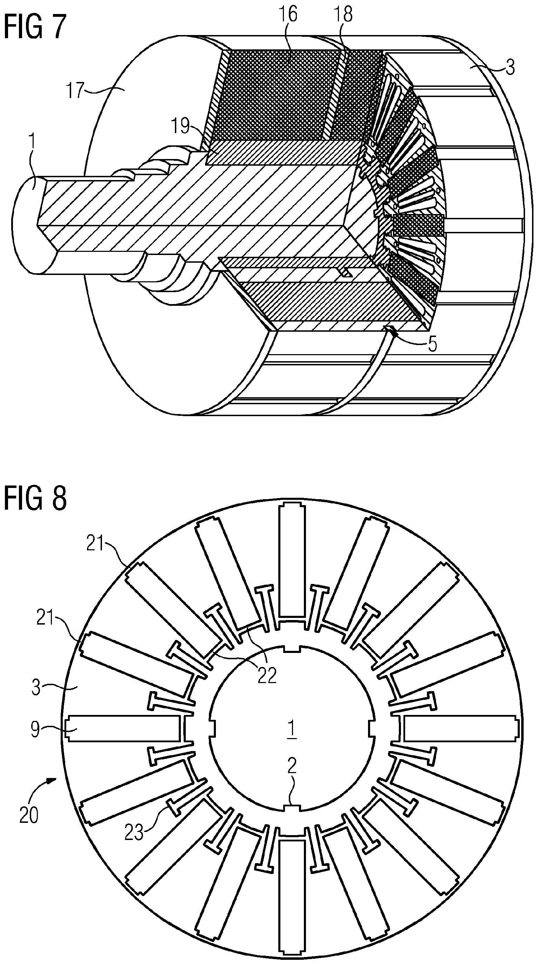

In FIG 6 ist ein Querschnitt durch den fertig gestellten Einzelsegmentläufer von FIG 5 dargestellt, und in FIG 7 der Läufer mit einem Teilausschnitt. Insbesondere ist der FIG 6 zu entnehmen, wie die Fixierungskonturen 7 durch Formmasse 19 umschlossen sind, welche außerdem einen Ring bzw. eine Innenhülse 19 um die mit Nuten 2 versehene Welle 1 bildet. Die abgeschlossenen Hohlräume 14 sind nicht mit der Formmasse gefüllt, während die beim Spritzgussvorgang offenen Hohlräume 13 nun mit der Formmasse gefüllt sind. Ferner sind auch die Endscheiben 17 sowie die Trennscheibe 18 aus der Formmasse gebildet.

Bei diesem ersten Ausführungsbeispiel werden also Blecheinzelsegmente bzw. Blechpaketsegmente 3 zur Erreichung eines streuungsarmen Aufbaus verwendet.

Die Figuren 8 bis 14 zeigen ein vereinfachtes Herstellungsverfahren für einen Einzelsegmentläufer. Dazu werden gemäß FIG 8 einteilige, ringförmige Bleche mit entsprechenden Ausstanzungen benutzt. Ein solches Blech 20 hat beispielsweise die in FIG 8 dargestellte Kontur. Die gleiche Kontur ergibt sich für das gesamte Rohblechpaket, wie es zusammen mit der Welle 1 in dem Formwerkzeug positioniert wird. Je ein Einzelblech aller am Umfang angeordneten Blechpaketsegmente 3 ist Teil des einteiligen Blechs 20. Die Einzelbleche sind am Außenumfang des ringförmigen Blechs 20 mit ersten Stegen 21 paarweise verbunden. Außerdem sind sie an der zum Zentrum des ringförmigen Blechs 20, also zur Achse der Welle 1 gewandten Seite des Blechs 20 über einen zweiten Steg 22 paarweise verbunden. Zwei benachbarte Einzelbleche sind also mit einem ersten Steg 21 und einem zweiten Steg 22 verbunden. Damit sind auch alle Blechpaketsegmente 3 ringförmig miteinander verbunden. Zwischen den Stegen 21 und 22 sind auch hier die Magnettaschen 9 ausgebildet.

In dem vorliegenden Ausführungsbeispiel sind die zur Fixierung der Blechpaketsegmente 3 notwendigen Fixierkonturen 23 nicht außen an den jeweiligen Blechpaketsegmenten 3, sondern in deren Innerem angeordnet. Die Fixierkonturen 23 besitzen hier einen T-förmigen Querschnitt, und sie bilden ebenfalls eine Hinterschneidung für die einzubringende Formmasse, sodass ein Formschluss erreicht wird, mit dem die Blechpaketsegmente 3 an der Welle 1 gehalten werden. Der Fuß des "T" aller Fixierkonturen 23 weist zur Achse der Welle 1.

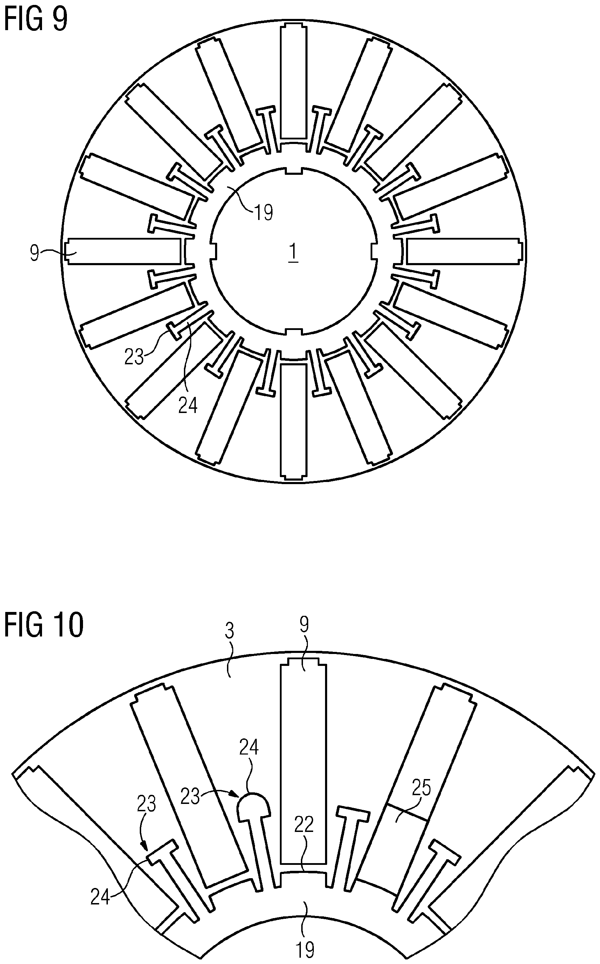

FIG 9 zeigt nun die Anordnung von FIG 8 nach dem Ausgießen. Der Zwischenraum zwischen der Welle 1 und der Innenseite des gesamten Blechpakets ist ausgegossen und bildet die Innenhülse 19. Die Verguss- bzw. Formmasse ist wiederum amagnetisch und wie in dem vorhergehenden Ausführungsbeispiel aus Aluminium, Edelstahl, Kunststoff oder dergleichen gebildet. Die Fixierkonturen 23 sind ebenfalls mit der Formmasse gefüllt, da sie ja zur Welle hin offen sind. Damit besitzt die Innenhülse 19 entsprechende Fortsätze 24, die in die Fixierkonturen 23 ragen und den Formschluss herstellen.

Wie in der vergrößerten Ansicht von FIG 10 zu erkennen ist, verhindern die zweiten Stege 22, dass die Formmasse in die Magnettaschen 9 eindringt. Als Gussverfahren ist hier wie auch in den vorhergehenden Ausführungsbeispielen sowohl Druckguss als auch Kokilenguss möglich. Wird bei diesem Bearbeitungsschritt die Welle nicht gleichzeitig mit eingegossen, so muss sie zu einem späteren Zeitpunkt, z.B. durch Kaltfügen mit dem Rotorpaket verbunden werden.

Aus FIG 10 geht außerdem hervor, dass die Fixierkonturen 23 nicht nur einen T-förmigen Querschnitt besitzen können. Vielmehr können sie beispielsweise auch einen pilzförmigen oder anderen Querschnitt besitzen. Wesentlich ist nur, dass mindestens eine Hinterschneidung für die radiale Fixierung des jeweiligen Blechpaketsegments 3 vorhanden ist.

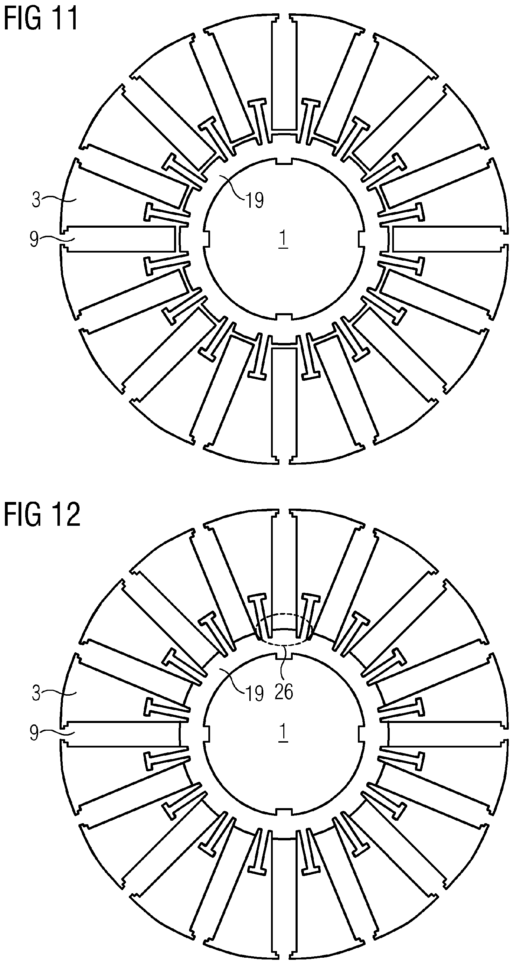

In einem weiteren Bearbeitungsschritt erfolgt das Öffnen der äußeren, d.h. der ersten Stege 21 des Blechschnitts durch eine Dreh- bzw. Fräsbearbeitung. Das Resultat ist in FIG 11 dargestellt. Die Bearbeitung des Außenumfangs hat den Vorteil, dass dadurch der geforderte Luftspalt zwischen Läufer und Ständer präzise und damit auch klein ausgeführt werden kann. Das Öffnen der ersten Stege 21 kann sofort durch die Drehbearbeitung erfolgen. Alternativ wird zuerst der Außendurchmesser durch Drehen bearbeitet und danach die äußeren Stege durch eine Fräsbearbeitung geöffnet. Nach diesem Bearbeitungsschritt sind die Blechpaketsegmente 3 außen bereits voneinander getrennt.

FIG 12 zeigt das Ergebnis des nächsten Bearbeitungsschritts, bei dem die inneren, d.h. die zweiten Stege 22 entfernt sind. Der gestrichelte Kreis 26 verdeutlicht, dass der zweite Steg 22 entfernt wurde. Die Wegnahme des zweiten Stegs 22 in jeder Magnettasche 9 und die genaue Definition des Magnetsitzes kann durch eine Fräsbearbeitung erfolgen.

In einem anschließenden Schritt werden gemäß FIG 13 die Permanentmagnete 16 in die Magnettaschen 9 eingesetzt. Radial nach außen werden die Magnete 16 durch die Positionierungshilfen 11 gehalten, die also mit den Magneten 16 einen Formschluss bilden.

FIG 14 zeigt den Einzelsegmentläufer in seiner Endphase nach der Herstellung. Zusammen mit FIG 13 ist klar zu erkennen, dass die Fortsätze 24 am Innenring 19 die Blechpaketsegmente 3 an der Welle 1 fixieren. Diese wiederum fixieren die Permanentmagnete 16 radial und in Umfangsrichtung.

Bei dieser zweiten Ausführungsform wird also das Rotorpaket dadurch hergestellt, dass am Anfang einteilige Rotorbleche verwendet werden. Im Laufe der einzelnen Bearbeitungsschritte wird ein Läufer hergestellt, der alle Anforderungen erfüllt. Insbesondere ermöglicht die Anordnung der Magnete nach dem Flusskonzentrationsprinzip eine optimale Flussführung. Außerdem kann ein präziser Außendurchmesser und damit ein sehr kleiner Luftspalt im Motor realisiert werden, da die Toleranzkette praktisch nur aus einem Teil besteht. Aufgrund der Reduktion der Anzahl der Rotorteile ergibt sich eine einfache Montage und damit ein serientaugliches Fertigungsverfahren.

## Patentansprüche

1. Verfahren zum Herstellen eines Einzelsegmentläufers für eine elektrische Maschine durch
- Anordnen einer Welle (1) in einem Formwerkzeug,
- Anordnen mehrerer, jeweils voneinander beabstandeter Blechpaketsegmente (3) am Umfang der Welle verteilt in dem Formwerkzeug, wobei die Blechpaketsegmente jeweils eine Fixierkontur (7,23) für einen Formschluss zu ihrer radialen Fixierung auf der Welle besitzen,
- Anordnen je eines Permanentmagneten (16) zwischen jeweils zwei der Blechpaketsegmente (3),
- Ausgießen eines Zwischenraums zwischen der Welle (1) und jeder Fixierkontur (7,23) der Blechpaketsegmente (3) durch ein aushärtbares amagnetisches Material, so dass
- das ausgehärtete amagnetische Material mit jeder Fixierkontur bezogen auf die radiale Richtung einen Formschluss bildet und jedes Blechpaketsegment damit an der Welle gehalten wird, wobei
- das Anordnen der Blechpaketsegmente (3) beinhaltet, dass eine Vielzahl an einteiligen, ringförmigen Blechen (20) koaxial mit der Welle (1) angeordnet wird, wobei jedes Blech (20) je ein Einzelblech jedes der Blechpaketsegmente (3) aufweist, wobei
- jedes Blech (20) am Umfang verteilt Magnetaussparungen besitzt, durch die zwischen den Blechpaketsegmenten (3) Magnettaschen (9) gebildet werden, in die die Permanentmagnete (16) eingesteckt werden, und
- jedes Blech (20) an seinem Außenumfang vor dem Ausgießen durch erste Stege (21) geschlossen ist, und nach dem Ausgießen die Stege (21) beseitigt werden,
**dadurch gekennzeichnet, dass**
- jede Magnetaussparung an der zum Zentrum des jeweiligen ringförmigen Blechs (20) weisenden Seite durch einen zweiten Steg (22) geschlossen ist, sodass beim Ausgießen das amagnetische Material nicht in die Magnettaschen (9) fließt, und die zweiten Stege (22) nach dem Ausgießen entfernt werden.

2. Verfahren nach einem der vorhergehenden Ansprüche, wobei die Fixierkontur (7,23) im Fuß (6) jedes Blechpaketsegments (3), der zu der Welle (1) gerichtet ist, mit einer Hinterschneidung realisiert wird, welche einer bei der Rotation des Einzelsegmentläufers auf das jeweilige Blechpaketsegment (3) wirkende Zentrifugalkraft entgegenwirkt.

3. Verfahren nach einem der vorhergehenden Ansprüche, wobei in jedem Blechpaketsegment (3) ein Hohlraum (13,14) durch korrespondierende Aussparungen in den Einzelblechen des Blechpaketsegments gebildet wird, welcher vor dem Schritt des Ausgießens an beiden Stirnseiten des Blechpaketsegments verschlossen wird, oder welcher mit dem amagnetischen Material ausgegossen wird.

4. Verfahren nach einem der vorhergehenden Ansprüche, wobei axial hintereinander mehrere Blechpaketsegmente (3) jeweils getrennt durch einen vorgegebenen Abstand in dem Formwerkzeug angeordnet werden, und der durch den Abstand sich ergebende Zwischenraum beim Ausgießen mit ausgegossen wird.

5. Verfahren nach einem der vorhergehenden Ansprüche, wobei zum Ausgießen ein Kunststoff, insbesondere ein faserverstärkter Kunststoff, oder Aluminium verwendet wird.

## Claims

1. Method for producing an individual-segment rotor for an electric machine, by
- arranging a shaft (1) in a mould,
- arranging a plurality of laminated core segments (3), which are respectively at a distance from one another, on the circumference of the shaft in a distributed manner in the mould, wherein the laminated core segments in each case have a fixing contour (7, 23) for a positive connection for radially fixing the laminated core segments on the shaft,
- arranging one respective permanent magnet (16) between each pair of laminated core segments (3),
- filling an intermediate space between the shaft (1) and each fixing contour (7, 23) of the laminated core segments (3) with a curable non-magnetic material, so that
- the cured non-magnetic material forms a positive connection relative to the radial direction with each fixing contour and each laminated core segment is retained on the shaft thereby, wherein
- the arrangement of the laminated core segments (3) is such that a plurality of single-component annular laminations (20) are arranged coaxially with the shaft (1), wherein each lamination (20) comprises one respective individual lamination of each of the laminated core segments (3), wherein
- each lamination (20) has magnet recesses distributed on the circumference, magnet pockets (9) being formed thereby between the laminated core segments (3) and the permanent magnets (16) being inserted therein, and
- each lamination (20) is closed on its outer circumference by first bridges (21) before the filling process and the bridges (21) are removed after the filling process,
**characterised in that**
- each magnet recess on the side facing the centre of the respective annular lamination (20) is closed by a second bridge (22), so that during the filling process the non-magnetic material does not flow into the magnet pockets (9) and the second bridges (22) are removed after the filling process.

2. Method according to one of the preceding claims, wherein the fixing contour (7, 23) is produced with an undercut in the base (6) of each laminated core segment (3) which is oriented toward the shaft (1), said undercut counteracting the centrifugal force which acts on the respective laminated core segment (3) during the rotation of the individual-segment rotor.

3. Method according to one of the preceding claims, wherein a hollow space (13, 14) is formed in each laminated core segment (3) by corresponding recesses in the individual laminations of the laminated core segment, said hollow space being closed before the filling step on both front faces of the laminated core segment or being filled with the non-magnetic material.

4. Method according to one of the preceding claims, wherein a plurality of laminated core segments (3) are arranged axially one behind the other, in each case separated by a predetermined spacing in the mould, and the intermediate space produced by the spacing is filled during the filling process.

5. Method according to one of the preceding claims, wherein a plastics material, in particular a fibre-reinforced plastics material, or aluminium is used for the filling process.

## Revendications

1. Procédé de fabrication d'un rotor à segments individuels pour une machine électrique, dans lequel:
- on met un arbre (1) dans un outil de moulage,
- on met plusieurs segments (3) de paquet de tôles à distance les uns des autres sur le pourtour de l'arbre de manière répartie dans l'outil de moulage, les segments de paquet de tôles ayant respectivement un contour (7, 23) d'immobilisation pour une complémentarité de forme en vue de leur immobilisation radiale sur l'arbre,
- on met respectivement un aimant (16) permanent entre respectivement deux des segments (3) de paquet de tôles,
- on fait couler, dans un espace intermédiaire entre l'arbre (1) et chaque contour (7, 23) d'immobilisation des segments (3) de paquet de tôles, une matière amagnétique durcissable de manière à ce que
- la matière amagnétique durcie forme avec chaque contour d'immobilisation, rapportée à la direction radiale, une complémentarité de forme et de manière à ce qu'ainsi, chaque segment de paquet de tôles soit maintenu sur l'arbre, dans lequel
- mettre les segments (3) de paquet de tôles comprend mettre une pluralité de tôles (20) annulaires d'une seule pièce coaxialement avec l'arbre (1), chaque tôle (20) ayant respectivement une tôle individuelle de chacun des segments (3) de paquet de tôles, dans lequel
- chaque tôle (20) a, répartis sur le pourtour, des évidements à aimant par lesquels il est formé, entre les segments (3) de paquet de tôles, des poches (9) à aimant dans lesquelles les aimants (16) permanents sont enfichés et
- chaque tôle (20) est fermée sur son pourtour extérieur avant la coulée par de premières réglettes (21) et, après la coulée, les réglettes (21) sont éliminées,
**caractérisé en ce que**
- chaque évidement pour un aimant est, du côté tourné vers le centre de la tôle (20) annulaire respective, fermé par une deuxième réglette (22) de manière à ce que, lors de la coulée, la matière amagnétique ne coule pas dans les poches (9) à aimant et les deuxièmes réglettes (22) sont retirées après la coulée.

2. Procédé suivant l'une des revendications précédentes, dans lequel le contour (7, 23) d'immobilisation au pied (6) de chaque segment (3) de paquet de tôles, qui est dirigé vers l'arbre (1), est réalisé avec une contre-dépouille qui s'oppose à une force centrifuge s'appliquant, à la rotation du rotor à segments individuels, au segment (3) de paquet de tôles respectif.

3. Procédé suivant l'une des revendications précédentes, dans lequel on forme, dans chaque segment (3) de paquet de tôles, une cavité (13, 14) par des évidements correspondants dans les tôles individuelles du segment de paquet de tôles, cavité qui, avant le stade de coulée, est fermée sur les deux côtés frontaux du segment de paquet de tôles ou qui est remplie de la matière amagnétique.

4. Procédé suivant l'une des revendications précédentes, dans lequel on met, dans l'outil de moulage, plusieurs segments (3) de paquet de tôles les uns derrière les autres axialement en les séparant d'une distance donnée à l'avance et on remplit l'espace intermédiaire se produisant par cette distance lors de la coulée.

5. Procédé suivant l'une des revendications précédentes, dans lequel on utilise, pour la coulée, une matière plastique, notamment une matière plastique renforcée par de la fibre ou de l'aluminium.
